# EUROPEAN PATENT APPLICATION

(11) **EP 4 261 822 A1**
(43) Date of publication of application: **18.10.2023**
(21) Application number: 22305548.4
(22) Date of filing: 14.04.2022
(51) Int. Cl.: G10L 13/08, G10L 15/187, G10L 15/06, G10L 15/02

(54) **SETTING UP OF SPEECH PROCESSING ENGINES**

(71) Applicant: Vivoka, 57070 Metz (FR)
(72) Inventor: LEROY, Vincent, 57070 METZ (FR); REBISCHUNG, Robin, 57070 METZ (FR)
(74) Representative: Atout PI Laplace

(57) **Abstract**

The invention relates to a computer-implemented method comprising the steps of: accessing a table of conversion between a plurality of phonetic alphabets and a reference representation; receiving from a user a first association between a word and a series of phonemes in a first phonetic alphabet belonging to said plurality of phonetic alphabets; obtaining a selection of a speech processing engine using a second phonetic alphabet belonging to said plurality of phonetic alphabets and different from the first phonetic alphabet; converting said series of phonemes in said first phonetic alphabet into a series of elements of said reference representation using said table; converting said series of elements said reference representation into a series of phonemes in said second phonetic alphabet using said table; generating a second association between said word and said series of phonemes in said second alphabet; setting up said speech processing engine using said second association.

## Description

### FIELD OF THE INVENTION

The present invention relates to the field of speech processing. More specifically, it relates to the field of setting up different speech processing engines that rely on different phonetic alphabets.

### BACKGROUND PRIOR ART

Speech processing refers, in general, to the processing of speech. It encompasses a number of different types of processing, such as Automatic Speech Recognition (ASR), and Text To Speech (TTS).

Automatic Speech Recognition (ASR) relates to the automatic recognition of speech by computers. ASR solutions consist in recording a speech from a user using a microphone, then analyzing the recorded audio waves to identify the speech that was uttered by the user. The output of an ASR engine is usually a series of words and sentences corresponding to an understanding of the speech uttered by the user.

Text To Speech (TTS) relates to the transcription of a text to a speech. Thus, a TTS engine takes as input a series of words, and generates from this series of words a speech to be reproduced by loudspeakers. The generated speech can for example take the form of a waveform.

From a user's perspective, the speech processing engine associates words and sounds. For example, an ASR engine converts sounds into words, while a TTS engine converts words to sounds. However, while a user often handles words expressed in natural language and conventional alphabets (such as for example Latin, Greek, Cyrillic alphabets), the speech processing engines internally rely on phonetic alphabets, such as for example the International Phonetic Alphabet (IPA), Kirshenbaum, or L&H+ alphabets. Indeed, the phonetic alphabets represent the sounds themselves, and are thus well suited for establishing a conversion between text and speech.

One task a user may be required to perform in order to obtain an efficient setup of speech processing engines is to provide associations between words and their phonetic representations. This is especially useful for taking into account the specificities of accent and pronunciation of a region in which a speech processing engine is to be used. Indeed, the same word in the same language can be expressed in different ways according to the dialect, accent which is used by the speaker. For example:
- the word *"hot"* is usually uttered [hot] in British English, but [ha:t] in American English;
- the word *"corn"* is usually uttered [ko:n], but [ko:rn] in American English.

The British language can of course be further divided into a wide number of specific pronunciation and dialects, such as Australian English, Indian English, Scottish English, Texan English, Oxford English, etc. The same issue arises in other languages. For example, the pronunciation of the same words in the French language can be uttered very differently by speakers from France, subsaharian Africa or Quebec, or even speakers from specific regions such as Alsace, Provence or Corse for example.

Furthermore, certain words have different meanings in the different dialects of a same language. For example, the French word "char" means "car" when spoken by a speaker from Quebec, or "tank" (in the sense of armored combat vehicle) when spoken by a speaker from France. It is therefore desirable for speech processing engines to associate the pronunciation in the dialect of sound representing the language with the written meaning in the dialect of the language of the user of the engine. For example, when using a TTS engine to convert sentences in French, written by a user from France, to a voice that utters the sentence in the Quebec dialect of French, it may be desirable to utter the word "voiture" (which means "car" in the dialect of French spoken in France) as [∫αR], which corresponds to the utterance of the word "char" by a speaker from Quebec.

Therefore, in order to efficiently set up a speech processing engine, a user must provide an important number of associations between written words and words in a phonetic alphabet.

The user may be interested to use the same associations in different speech processing engines. For example, he/she may want to use a different TTS / ASR engine to benefit from different functionalities or performances, while benefiting from the already defined associations between phonetic and written representations. A user may also be familiar with a phonetic alphabet which is not the one used by the speech processing engine. Therefore, the user is not able to efficiently write associations for setting up the speech processing engine.

However, this may not be possible, because different speech processing engines may rely on different phonetic representations. An association between a written word and a phonetic representation therefore cannot be directly used in a different speech processing engine.

This situation is not convenient for the users, and prevents in practice the use of different speech processing engines. The performances of the speech processing engines are also reduced, because it is not possible to select the speech processing engine which is the best suited in a given context to use a given phonetic alphabet.

There is therefore the need for a solution to set up different speech processing engines using different phonetic alphabets using equivalent associations between written words and phonetic representations.

### SUMMARY OF THE INVENTION

To this effect, the invention discloses a computer-implemented method comprising the steps of: accessing a table of conversion between a plurality of phonetic alphabets and a reference representation; receiving from a user a first association between a word and a series of phonemes in a first phonetic alphabet belonging to said plurality of phonetic alphabets; obtaining a selection of a speech processing engine using a second phonetic alphabet belonging to said plurality of phonetic alphabets and different from the first phonetic alphabet; converting said series of phonemes in said first phonetic alphabet into a series of elements of said reference representation using said table; converting said series of elements said reference representation into a series of phonemes in said second phonetic alphabet using said table; generating a second association between said word and said series of phonemes in said second alphabet; setting up said speech processing engine using said second association.

Advantageously, said reference representation is a phonetic alphabet belonging to said plurality of alphabets.

Advantageously, the elements of said reference representation are indexes representing phonemes.

Advantageously, said step of setting up said speech processing engine comprises adding said second association to a dictionary of said speech processing engine.

Advantageously, said step of setting up said speech processing engine comprises adding said second association to a training database, and using a machine learning engine to train said speech processing engine using said training database.

Advantageously, said steps of converting said series of phonemes in said first phonetic alphabet into the series of elements of said reference representation, converting said series of elements said reference representation into the series of phonemes in said second phonetic alphabet, generating the second association and setting up said speech processing engine are repeated for each word used in a dictionary of said speech processing engine.

Advantageously, the speech processing engine is an ASR engine, and said steps of converting said series of phonemes in said first phonetic alphabet into the series of elements of said reference representation, converting said series of elements said reference representation into the series of phonemes in said second phonetic alphabet, generating the second association and setting up said speech processing engine are repeated for each word used in one or more grammars of said ASR engine.

Advantageously, the computer-implemented method further comprises using said speech processing engine.

Advantageously, said speech processing engine is an automatic speech recognition (ASR) engine, and said step of using said speech processing engine comprises the substeps of: receiving an audio input; using an acoustical model to transform the audio input into an input series of phonemes; if said input series of phoneme matches the series of phonemes in said second phonetic alphabet, detecting said word; displaying said word.

Advantageously, said speech processing engine is a text to speech (TTS) engine, and said step of using said speech processing engine consists in: receiving a text input comprising an input word; if said input word matches the word received from the user, converting said input word into said series of phonemes in said second phonetic alphabet; using a voice model to transform said series of phonemes in said second phonetic alphabet into an audio output; playing said audio output.

The invention also discloses a speech processing engine set up using a computer-implemented method according to any one of the preceding claims.

The invention also discloses a computer-implemented method of using a speech processing engine according to one of the embodiments of the invention.

The invention also discloses a computing system comprising at least one processing logic configured to execute a method according to any one of the preceding claims.

The invention also discloses a computer program product comprising computer code instructions which, when the program is executed by a computer, cause the computer to carry out the steps of the method according to one of the embodiments of the invention.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1 represents a voice assistant for the development of which the invention can be implemented;
- Figure 2 represents an Automatic Speech Recognition (ASR) engine for the set up of which the invention can be implemented;
- Figure 3 represents a Text To Speech (TTS) engine for the set up of which the invention can be implemented;
- Figure 4 represents an example of a computing system in a number of embodiments of the invention;
- Figure 5 represents an example of an interface to edit ASR grammars in a number of embodiments of the invention;
- Figure 6 represents an example of an interface to run a TTS engine in a number of embodiments of the invention;
- Figure 7 represents a computer-implemented method in a number of embodiments of the invention;
- Figure 8 represents an interface to define associations between a word and a series of phonemes in a first phonetic alphabet;
- Figure 9 represents an example of association between a word and a series of elements in a reference representation.

### DETAILED DESCRIPTION OF THE INVENTION

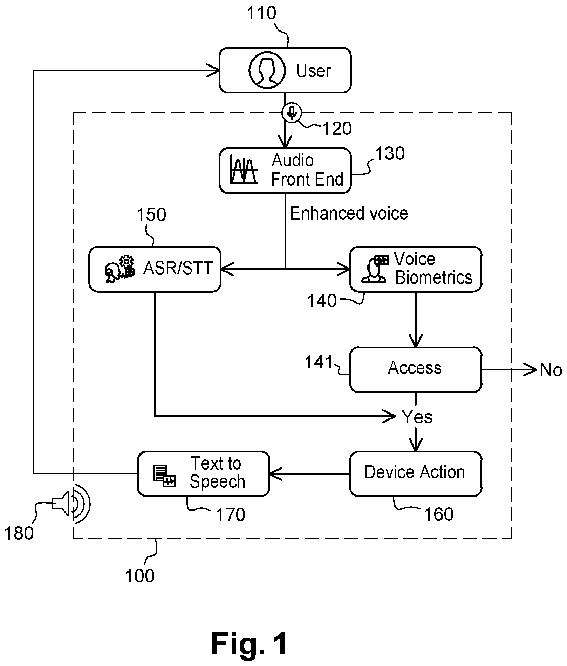

Figure 1 represents a voice assistant in which the invention can be implemented.

A voice assistant aims at interacting with a user to help this user to perform actions through speech. To this effect, a voice assistant may use software and/or hardware components running on one or more computing platforms to listen to the speech uttered by a user, perform actions accordingly, and, if needed, respond through speech to the user. Responding to speech to the user for example allows asking questions to resolve certain ambiguities, ask further details to the user, etc.

In the example of figure 1, the voice assistant 100 is formed of a plurality of modules.

A digital microphone 120 records the audio waves emitted by the speech of a user 110. The recorded audio waves are first processed by an audio front end module 130 which performs audio processing in order to improve the ability of the ASR 150 to use the audio to perform speech recognition. The audio front end module 130 may enhance the digital audio, for example by performing audio denoising, equalization, etc.

The voice assistant 100 may also comprise a voice biometrics module 140 that performs biometrics detection on the user voice (for example, the voice biometric module is able to determine if the voice which is hear belongs to a known/trusted user or not) and an access module 141 that may grant or not the access to action functionalities based on the voice biometrics detection. For example, the ability to perform certain actions, or even simply use the voice assistant may be restricted to a specific list of trusted users.

The voice assistant 100 also comprises an Automatic Speech Recognition (ASR) module 150, also called Speech To Text (STT) module. The ASR module interprets the audio waves (in the example of figure 1, the enhanced audio waves at the output of the audio front end module 130) and transforms them into a series of words and sentences.

Upon the detection of specific sentences, a device action module 160 can trigger the execution of specific action. For example, if the voice assistant 100 is implemented within a mobile phone and the device action module 160 detects the sentence *"call Jonathan",* the mobile phone can be configured to cause the mobile phone to call the contact called *"Jonathan".*

In certain cases, the device action consists in saying a speech to the user. For example, if the mobile phone is not aware of any contact called *"Jonathan",* the device action may consist in saying to the user *"The contact Jonathan is not known. Please repeat the name please".* To this effect, the voice assistant 100 further comprises a Text To Speech (TTS) module 170. The TTS module is configured to convert the sentence into an audio signal, and cause loudspeakers 180 to convert the audio signal into sound to be heard by the user.

Therefore, the voice assistant 100 provides a complete solution to listen to the audio inputs of a user, cause the execution of the corresponding actions, and provide the user with an interactive experience by providing an audio feedback.

The modules of the voice assistant may be executed in one or more computing devices. For example, the whole voice assistant may be executed in a user computing device such as a smartphone, tablet, personal computer, etc. Alternatively, some of the modules may be executed remotely on servers. For example, the audio front end module 130 may be executed on a user device comprising the microphone 120 and the loudspeakers 180, and the other modules may be executed remotely on one or more servers.

The present invention relates to the development of an ASR module such as the ASR module 150. The present invention is applicable to ASRs to be used in voice assistants, but also in any other applications. ASRs are used in a large number of applications, such as voice control, video games, robotics, home automation, etc.

The applicant has created a development kit to develop voice assistants called Voice Development Kit (VDK). The invention can be implemented within such development kit for voice assistant, but also in any development suite which is able to develop, configure, test, or manage ASR engines.

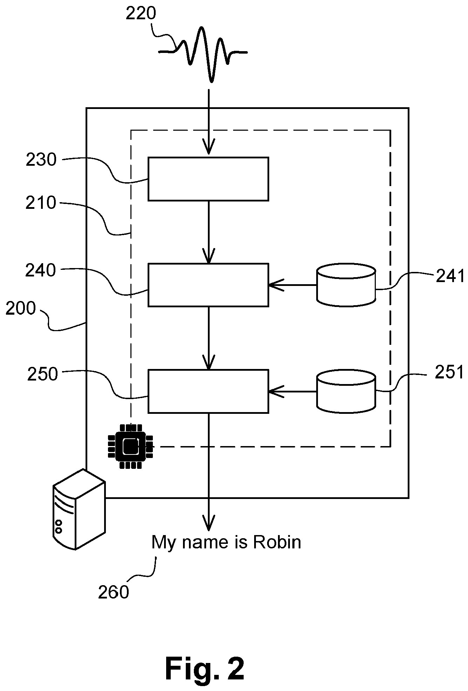

Figure 2 represents an Automatic Speech Recognition (ASR) engine for the setup of which the invention can be implemented.

The ASR engine is intended to be executed on a computing device 200, which may be for example a user personal computing device, or a server. The device 200 comprises at least one processing logic 210. According to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called *"the processing logic".* However, it should be noted that the operations of the invention may also be performed in a single processing logic, or a plurality of processing logics, for example a plurality of processors. Even if a single computing device is represented in figure 2, the ASR engine could also be executed by distributed calculation on a plurality of processors in a plurality of different computing devices.

The processing logic 210 is configured to execute a plurality of modules 230, 240 and 250 of the ASR engine. The modules may be of different natures depending upon how the ASR engine is to be executed and the kind of processing logic. For example, the modules 230, 240 and 250 may be software modules.

The ASR engine is configured to receive as input a digital audio input 220. The digital audio input typically comprises user speech, and may take many different formats. For example, it may be streamed live, or stored in a digital file. It may be either formed of raw audio input, for example in the form of a PCM (Pulse Code Modulation) file, or a compressed audio input, for example audio compressed in the MP3 format. The digital audio input 220 may be formed of different numbers of channels, may have different bit depths, etc.

A first module 230 of acoustic model transforms the audio input 220 into a series of phonemes. Then, a second module 240 uses a dictionary of words 241 to translate the series of phonemes into a series of words. The dictionary 241 may for example comprise words of a defined language, including widely used proper nouns. The dictionary 241 may also contain words specific to a defined application of the ASR. For example, if the ASR is to be embedded within an application to control an automotive vehicle, the dictionary may comprise words dedicated to the control of vehicles.

In practice, the dictionary contains associations between series of phonemes and words, which allows finding the right words for a series of phonemes identified by the first module 230. As explained above, the ASR engine uses phonemes in a defined phonetic alphabet (for example, IPA). The dictionary 241 therefore contains associations between series of phonemes in the phonetic alphabet used by the ASR engines, and words.

Setting up the ASR engines may therefore comprise enriching the dictionary with the relevant associations for a defined use, for example taking into account specific accents, dialects, or the vocabulary of a technical field.

As explained above, one issue that limits the performances of the ASR engines is that different ASR engines use different phonetic alphabets, while a user may be familiar with only one. Thus, the user may not be able to enrich the dictionary 241 for any ASR engine, and the associations defined for a first ASR engine cannot always be reused for a second one.

One objective of the invention is to improve the performance of ASR engines, and more generally speech processing engines, by allowing a user to seamlessly implement associations of words with a phonetic representation, whatever the phonetic representation which is used internally by the ASR, and more generally speech processing engine.

At the output of the second module 240, a third module 250 uses a grammar 251 to translate the series of words at the output of the second module 240 into sentences. The grammar 251 represents rules of associations of words into sentences that allow forming meaningful sentences. The possible rules and possibilities of expressing rules will be described in greater details in the remaining of this disclosure.

The grammar 251 may be represented in different ways. For example, it may be stored in a digital file, for example in an Extensible Markup Language (XML) or Backus-Naur Form (BNF) language that is loaded by the third module 250. Alternatively, the grammar may be directly embedded within the third module 250 upon the creation (for example the compilation) of the ASR. The grammar can be compiled as a graph of probability of a series of words which is loaded at the launch of the ASR.

During the execution of the ASR, the third module 250 is configured to create sentences when the series of words at the output of the module 240 comply with the rules expressed by the grammar 251. These sentences are then output 260, as in the example of figure 2 the sentence *"My name is Robin".*

The ASR of figure 2 is provided by means of example only of ASR for the development of which the invention can be implemented. The invention can more generally be used for the development of any ASR that uses associations between words and series of phonemes. Even if an ASR has been exemplified through an ASR that uses grammar, the invention is also applicable to other kinds of ASRs such as free speech ASRs.

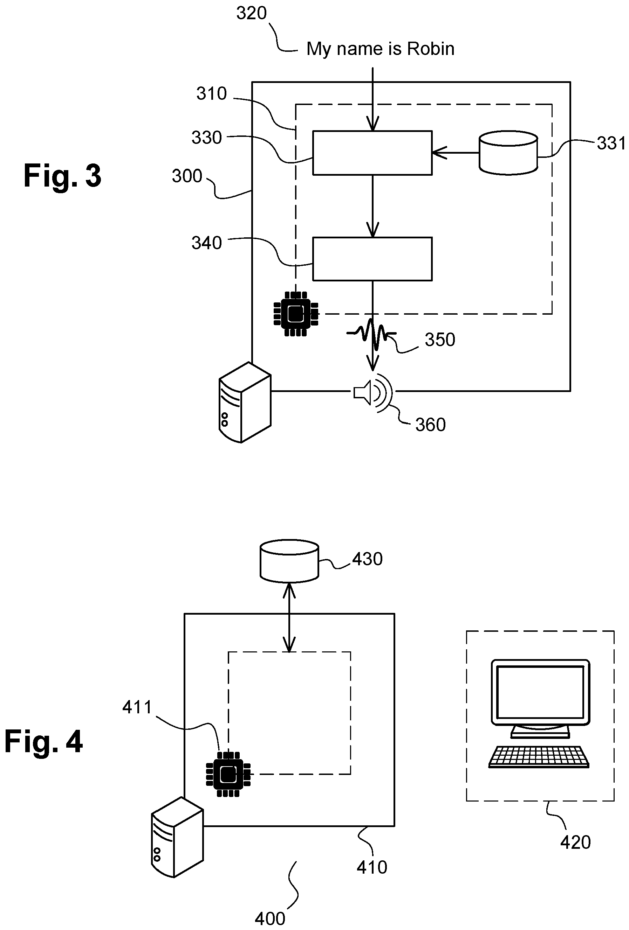

Figure 3 represents a Text To Speech (TTS) engine for the setup of which the invention can be implemented.

The TTS engine is intended to be executed on a computing device 300, which may be for example a user's personal computing device, or a server. The device 300 comprises at least one processing logic 310. For the sake of simplicity, in the remaining of the disclosure the one or more processing logic will be called *"the processing logic".* However, it should be noted that the operations of the invention may also be performed in a single processing logic, or a plurality of processing logics, for example a plurality of processors. Even if a single computing device is represented in figure 3, the ASR engine could also be executed by distributed calculation on a plurality of processors in a plurality of different computing devices.

The processing logic 310 is configured to execute a plurality of modules 330 and 340 of the TTS engine. The modules may be of different natures depending upon how the TTS engine is to be executed and the kind of processing logic. For example, the modules 330 and 340 may be software modules.

The TTS engine is configured to receive as input a series of words, for example the sentence *"My Name is Robin"* 320.

The first module 330 uses a dictionary of phonemes 341 to translate the series of words into a series of phonemes. The dictionary 331 may for example comprise phonemes in a defined acoustic alphabet, and associate to each phonemes words in a defined language. The association between phonemes and words may contain all the widely used words in a defined language. The dictionary 331 may also contain words specific to a defined application of the TTS. For example, if the TTS is to be embedded within an application to control an automotive vehicle, the dictionary may comprise words dedicated to the control of vehicles.

The dictionary may also comprise phonemes corresponding to a defined pronunciation of words, for example a defined dialect or regional pronunciation of a word.

Then, a second module 340 of voice model transforms the series of phonemes into a digital audio output 350.

The digital audio output 350 thus typically corresponds to user speech corresponding to the utterance of the sentence 320, and may take many different formats. For example, it may be streamed live, or stored in a digital file. It may be either formed of raw audio input, for example in the form of a PCM (Pulse Code Modulation) file, or a compressed audio input, for example audio compressed in the MP3 format. The digital audio output 350 may be formed of different numbers of channels, may have different bit depths, etc.

The digital audio output 350 is then sent to loudspeakers 360 in order for the digital audio output to be listened to.

Setting up a TTS engine may therefore comprise enriching the dictionary with the relevant associations for a defined use, for example taking into account specific accents, dialects, or the vocabulary of a technical field.

As explained above, one issue that limits the performances of the TTS engines is that different TTS engines use different phonetic alphabets, while a user may be familiar with only one. Thus, the user may not be able to enrich the dictionary 331 for any TTS engine, and the associations defined for a first TTS engine cannot always be reused for a second one.

One objective of the invention is to improve the performance of TTS engines, and more generally speech processing engines, by allowing a user to seamlessly implement associations of words with a phonetic representation, whatever the phonetic representation which is used internally by the TTS engine, and more generally speech processing engine.

The TTS of figure 3 is provided by means of example only of a TTS engine for the development of which the invention can be implemented. The invention can more generally be used for the development of any TTS engine.

Figure 4 represents an example of a computing system in a number of embodiments of the invention.

As will be explained in more details below, one objective of a computing system according to the invention is to improve the performances of speech processing engines by allowing a user to set up different speech processing engines using different phonetic alphabets using equivalent associations between written words and phonetic representations.

To this effect, in the example of figure 4, the computing system 400 comprises a single computing device 410 that comprises at least one processing logic 411. In other embodiments of the invention, the computing system 400 may comprise a plurality of communicating computing devices comprising a plurality of processing logics for performing distributed calculations. For the sake of simplicity, in the remaining of the disclosure the at least one processing logic 411will be called *"the processing logic".* However, it should be noted that the operations of the invention may also be performed in a single processing logic, or a plurality of processing logics, for example a plurality of processors. In cases where a plurality of processing logics is used, they may be either located on a single device, or distributed across a plurality of communicating computing devices.

The computing system has access to a table of conversion 430 between a plurality of phonetic alphabet, and a reference representation. The table may be either stored on the computing system itself, or accessed remotely. Stated otherwise, the table comprises correspondences between the phonemes of the plurality of phonetic alphabets, and elements of the reference representation. Therefore, an element of the reference representation can be identified for a given phoneme, and conversely.

The table of conversion may take many different forms. For example, it may be a simple table made of columns and rows, wherein each row represents an element of the reference representation, and each column a phonetic alphabet, or more a more complex representation, provided that it allows identifying correspondences between the phonemes of the plurality of phonetic alphabets, and elements of the reference representation. The table may also be formed by a database such as a relational database.

The computing system 400 further comprises input and output interfaces that allow interfacing with the computing device 410. These interfaces may include any interface that is usable to interact with a computer such as a keyboard, mouse, tactile pad, a microphone coupled to voice command software, a screen, etc.

More generally, the computing system 400 may be any system that possesses interfacing, editing and computing capabilities so that a user can edit an associations between words and series of phonemes, and configure a speech processing engine to use the associations, even if the series of phonemes are written in a phonetic alphabet which is different from the phonetic alphabet used internally by the speech processing engine.

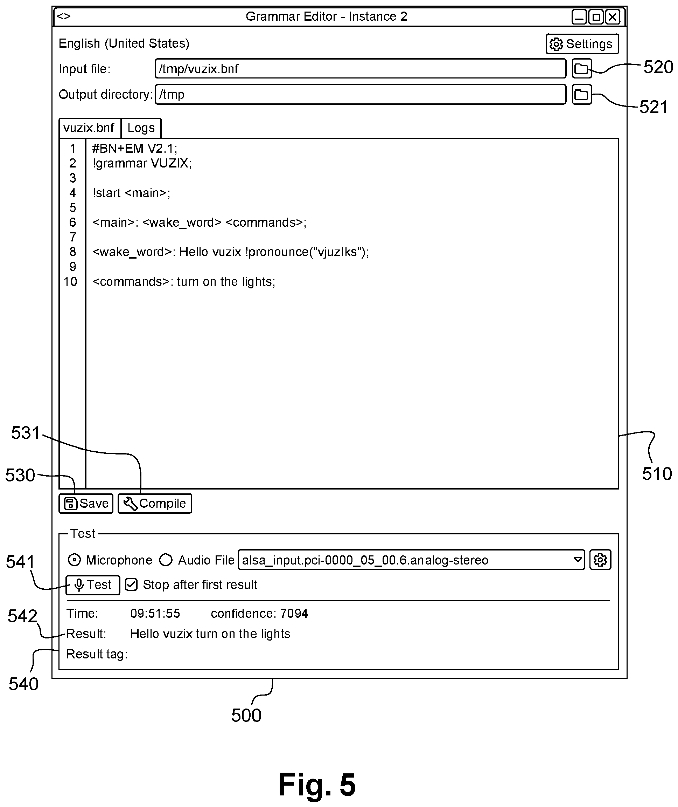

The figure 5 represents an example of an interface to edit ASR grammars in a number of embodiments of the invention.

The interface 500 may be for example an interface of a development tool for the development of ASR, or voice assistant provided to a user by the computing system 400.

The interface 500 comprises a text editing window 510 wherein the user can write grammar rules. The grammar rules use specific expressions that define what sentences and expressions can be understood by the grammar.

In the example of figure 5:
- the expression *"<wake_word> Hello vuzix"* means that this grammar rule shall be executed when the expression *"Hello vuzix"* is heard;
- the expression *"<commands>: turn on the lights"* means that, upon the execution of the grammar rule, an action defined as *"turn on the lights"* shall be executed.

Meanwhile, the expression *"vuzix !pronounce("vjuzlks")"* means that the word *"vuzix"* shall be heard when the sound defined by series of phonemes *"vjuzlks"* are heard. Therefore, an association between the series of phonemes *"vjuzlks"* and the word *"vuzix"* is inserted in a dictionary such as the dictionary 241 and, during the execution of the ASR, when the series of phonemes *"vjuzlks"* are detected, for example by the module 230, it is interpreted as the word *"vuzix".*

The folder sections 520 and 521 respectively allow selecting an input file (in this example "vuzix.bnf" that may start as an input point to write the grammar, and an output directory wherein the compiled ASR will be found.

The "save" button 530, and "compile" button 531 respectively allow saving the grammar in the input file, and compiling the ASR using the written grammar.

When compiling the ASR, the grammar can be compiled as a language model, for example in the form of a graph of probability of series of words that can be loaded at the execution of the ASR.

A test section window 540 allows a user to test the grammar and the association. When the user clicks on the *"test'* button 541, the microphone is activated, records the voice of the user and the grammar is executed, including the detection of the word *"vuzix"* upon the detection of the series of phonemes *"vjuzlks".* The result 542 of the detection is then displayed. In this example, the expression *"hello vuzix"* has been correctly detected, thereby causing the action *"turn on the lights".*

In the example of figure 5, the series of phonemes *"vuzix"* is expressed in a phonetic alphabet called L&H+. Therefore, the association can be used in a straightforward manner if the ASR engine, and more specifically the module 230 of acoustic model uses this phonetic alphabet.

In prior art solutions, the grammar shall therefore be completely rewritten if the user is willing to use an ASR engine which relies on a different phonetic alphabet. Furthermore, existing grammar rules cannot be reused. On the other hand, the invention allows using the grammar rules for any ASR engine, whatever the phonetic alphabet the ASR engine relies on.

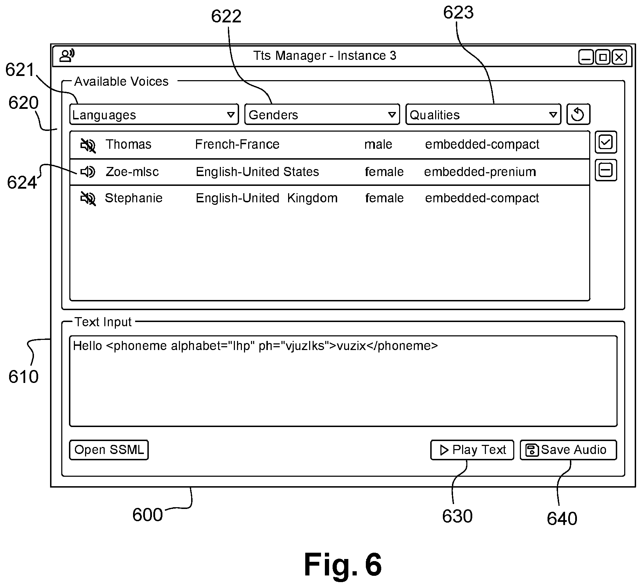

The figure 6 represents an example of an interface to run a TTS engine in a number of embodiments of the invention.

The interface 600 may be for example an interface of a development or test tool for the development of a TTS engine, or voice assistant provided to a user by the computing system 300.

The interface 600 comprises a text editing window 610 wherein the user can write a text input to read. The text input comprises the words *"Hello vuzix".* It also comprises an indication of how the word *"vuzix"* shall be pronounced. This association is defined by the keywords *"<phoneme> alphabet="lhp" ph="vjuzlks"* ... *<*/*phoneme>".* This means that the expression (here "*vuzix"*) between the tags *<phoneme>* and *<*/*phoneme>"* shall be read as the pronunciation defined by the series of phonemes *"vjuzlks"* in the phonetic alphabet "*lhp*" which stands for L&H₊.In this example, the edition is performed in the markup language called SSML (acronym for "Sp*eech Synthesis Markup Language".* This is however provided by means of example only, and the invention could be applied to texts edited in other kind of languages and syntaxes.

A voice window 620 allows the user to select a voice to read the text. The voices are defined by a plurality of different features such as their language, genders and qualities. The scrolling lists 621, 622 and 623 allow filtering the voices according to the desired features, in order to obtain a list such as the list 624, wherein the user can select the desired voice.

When the user clicks on the button *"Play text'* 630, the text is read using the selected voice. The user can save the resulting audio file using the button *"Save Audio"* 640.

In order to read the text, the expression *"<phoneme> alphabet="lhp" ph="vjuzlks" vuzix <*/*phoneme>"* therefore triggers the reading of the series of phonemes *"vjuzlks"* so that the user understands the word *"vuzix".* To this effect, a dictionary such as the dictionary 331 is enriched with the association between the word and the series of phonemes.

The operation is straightforward if the alphabet used by the TTS engine is the alphabet L&H+. However, if the phonetic alphabet used by the TTS engine is an alphabet other than L&H+, the prior art solutions require the user to completely rewrite the text input using a different phonetic alphabet. This limits the performance of the TTS engine, because the user may not be able to use another phonetic alphabet, or completely rewrite a large text. On the other hand, the invention allows enriching the dictionary, and using the association, even when the TTS engine internally relies on a different phonetic engine, as will be explained in more details below.

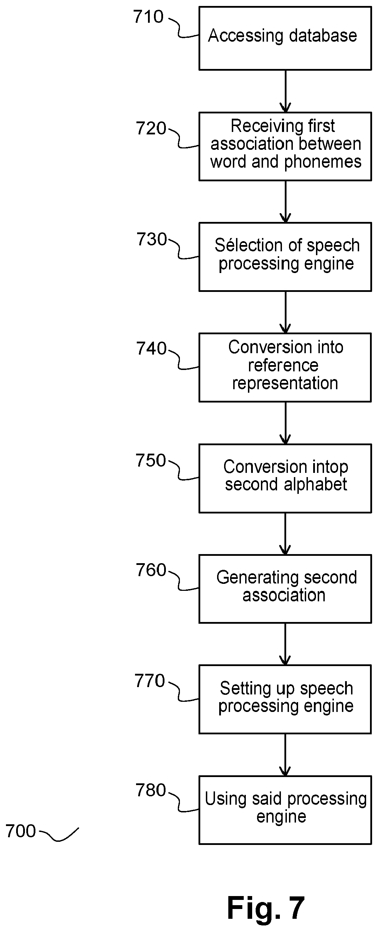

The figure 7 represents a computer-implemented method in a number of embodiments of the invention.

The method 700 is a computer-implemented method that can be executed for example by the system 400.

The method 700 comprises a first step 710 of accessing a table of conversion between a plurality of phonetic alphabets and a reference representation, such as the table 430.

As explained above, the table of conversion comprises correspondences between the phonemes of the plurality of phonetic alphabets, and elements of the reference representation.

The method 700 further comprises a second step 720 of receiving from a user a first association between a word and a series of phonemes in a first phonetic alphabet belonging to said plurality of phonetic alphabets.

An association between a word and a series of phonemes can be construed as any indication that a written word corresponds to a pronunciation defined by a series of phonemes, the series of phonemes being defined in a first phonetic alphabet.

The second step 720 can be performed in different ways. For example, the user can input a text that comprises keywords defining the association. For example, in figure 5, the expression *"vuzix !pronounce("vjuzlks")"* associates the word *"vuzix"* to the series of phonemes *"vjuzlks".*

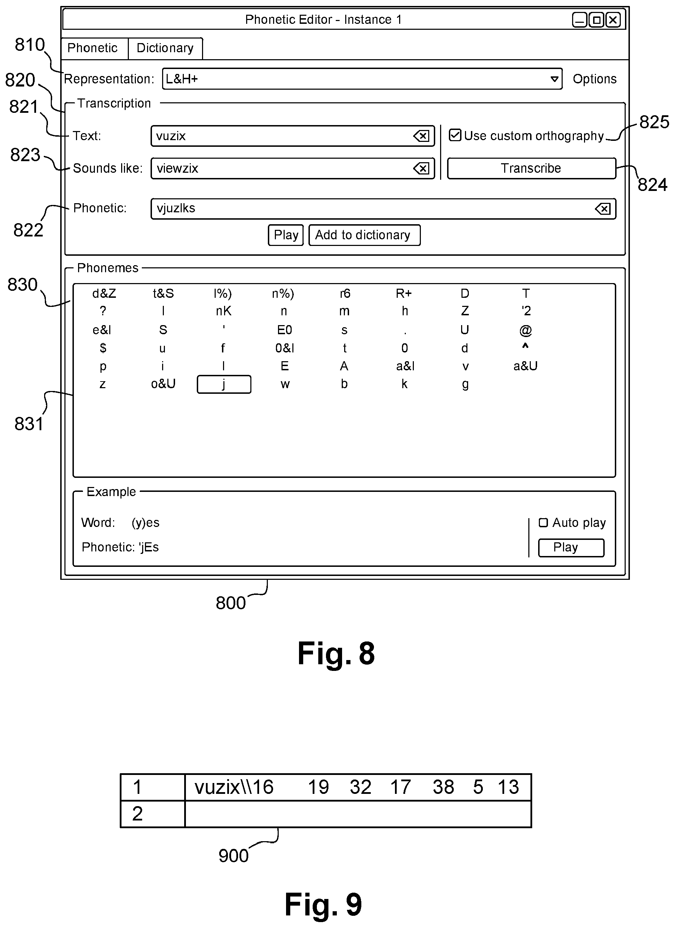

The association can also be defined in a graphical interface, such as shown for example in figure 8.

The figure 8 represents an interface to define associations between a word and a series of phonemes in a first phonetic alphabet.

The interface 800 comprises a dropdown menu 810 which allows selecting the first phonetic alphabet. Indeed, the interface 800 allows the user to define associations in different phonetic alphabets, so that the user is able to select a phonetic alphabet he/she is familiar with and/or a phonetic alphabet which well suits his/her needs. In the example of figure 8, the selected alphabet is the alphabet L&H+.

The interface 800 further comprises a transcription window 820 which allows a user to define associations between words and series of phonemes, or, stated otherwise, define how a words shall be transcript phonetically.

The window 820 comprises a first text form 821 wherein the user can enter the word.

The window 820 further comprises a second text form 822 wherein the user can enter or correct the corresponding series of phonemes. The user can either enter the phonemes directly, or use a window 830 comprising a table of phonemes 831. The user can thus click on the phonemes in the table 831 to insert the phonemes in the second text form 822. This therefore provides to the user an immediate overview of the phonemes that can be used.

Optionally, the window 820 can comprise a button 824 to automatically transcribe the word as written in a series of phonemes. If the checkbox 825 *"Use custom orthography"* 825 is not checked, the word as written in the first text form 821 is transcribed as a series of phonemes in the second text form 822. Otherwise the user can click on the checkbox 825 and write in a third text form 823 how the word "sounds like" in a conventional alphabet such as the Latin alphabet, then click on the button 824 to automatically transcribe the word as written in the third text form 823 as a series of phonemes in the second text form 822. The transcription may not be exact at this stage, and may be corrected by the user, but this provides a first approximation of the phonetic representation of the word, and therefore eases the task of the user.

The interface 800 therefore allows the user to define associations between a word and a series of phonemes in a first phonetic alphabet.

It is however provided by means of example only of an interface allowing to define associations between a word and a series of phonemes in a first phonetic alphabet, and any interface allowing to define an association between a written word and a phonetic transcription may be used within the invention.

Coming back to figure 7, the method 700 comprises a third step 730 of obtaining a selection of a speech processing engine using a second phonetic alphabet belonging to said plurality of phonetic alphabets and different from the first phonetic alphabet.

The speech processing engine may for example be an ASR engine such as the ASR 200, or a TTS engine such as the TTS 300. The invention is more generally applicable to any kind of speech processing engine which uses at some point a transcription of words into phonemes, or a transcription of phonemes into words.

The speech processing engine uses a second phonetic alphabet, different from the first phonetic alphabet. For example, the user may write an association between a word and a series of phonemes in the first phonetic alphabet "L&H+" as shown in the figure 8, while the speech processing engine relies on the second phonetic alphabet "IPA", so that the association cannot be used directly.

The selection of the speech processing engine may be obtained in different ways. It may be a selection by default, when a computer program is configured to execute a defined speech processing engine. It may also be a selection by a user. For example, when setting up the voice assistant 100, a user may select an ASR engine 150 and a TTS engine 170 he/she is willing to use.

The method 700 further comprises a fourth step 740 of converting said series of phonemes in said first phonetic alphabet into a series of elements of said reference representation using said table.

Stated otherwise, the fourth step 740 consists in applying the table of conversion to convert the series of phonemes in the first phonetic alphabet into elements of the reference representation.

According to a number of embodiments of the invention, the reference representation may take different forms.

In a number of embodiments of the invention, the reference representation is a phonetic alphabet belonging to said plurality of alphabets.

Therefore, in such cases, the step 740 consists in converting the series of phonemes in a single reference alphabet.

In a number of embodiments of the invention, the elements of said reference representation are indexes representing phonemes.

Stated otherwise, the reference representation is made of indexes that each represents a different phoneme. The phonemes are therefore indexed as "1", "2", "3," etc.

This provides several advantages.

First of all, this allows a custom definition of phonemes which allows taking into account a number of different phonemes as high as possible. For example, when a phoneme exists in a first phonetic alphabet but not in a second phonetic alphabet, the reference representation can comprise an index for this phoneme, and the table can define an exact conversion between the phoneme in the first alphabet and the index, and an approximate conversion between the index and a similar phoneme in the second phonetic alphabet.

Therefore, this allows obtaining the most precise phonetic representation that is allowed by the plurality of phonetic alphabets.

Furthermore, the indexes can be represented in a compact form. Therefore, the series of phonemes at the output of the conversion step 740 can be stored in an efficient form which results in storage gains.

At the output of the conversion step 740, the association between the word and the series of phonemes can therefore be saved using the reference representation, and retrieved for future use before executing the subsequent step of the method. Therefore, the associations can be saved once using the reference representations, and the subsequent step can be executed for a given speech selection of a processing engine.

The table of conversion might be obtained in different ways.

The table of conversion can be predefined and loaded, for example from a configuration file or stored in an executable code.

The table of conversion 430 can for example be defined by one or more experts. It is worth noting that, although many different associations between words and series of phonemes need to be defined in many different cases, such as taking into account a new accent, or words in a defined field, or more generally for any new use of a speech processing engine, the table of conversion shall be fairly fixed over time. Indeed, the conversion between each phonetic alphabet and the reference representation needs to be performed once, for a number of phonemes which is limited to a few tens. The table may therefore be modified to take into account new phonetic alphabets, or perform minor corrections, but it can be considered by the end user as a static table defined once for all by expert users.

The figure 9 represents an example of association between a word and a series of elements in a reference representation.

At the output of the step 740, an association is implicitly defined between the word and the series of elements in the reference representation.

For example, in figure 9, the reference representation is made of indexes representing phonemes, and the word vuzix is associated with the indexes 16 19 32 17 38 5 13, which correspond respectively to the phonemes *"**vjuzlks***" of the L&H+ alphabet in the table 430 in this example.

The association 900 thus obtained can be stored for future use. For example, all or a part of the content of the dictionaries 241 and 331 can be stored using the reference representation, and retrieved for future uses and executing the subsequent steps of the method 700.

As mentioned above, a reference representation based on indexes such as the representation of figure 9 provides the advantage of limiting storage needs.

Coming back to figure 7, the method 700 then comprises a fifth step 750 of converting said series of elements of said reference representation into a series of phonemes in said second alphabet using said table.

The step 750 consists in using the table 430 to convert the series of elements of the reference representation into of phonemes in said second phonetic alphabet.

At the output of step 750, the series of phonemes in the first alphabet is therefore converted into a series of phonemes in the second alphabet. For example, it may have been converted from L&H+ alphabet to IPA alphabet.

The method 700 further comprises a sixth step 760 of generating a second association between said word and said series of phonemes in said second alphabet.

The second association is therefore an association between the word, and the series of phonemes in the second alphabet.

For example, if the first association is an association between the word *"vuzix"* and the series of phonemes *"vjuzlks"* in a first phonetic alphabet which is the L&H+ alphabet, and the second alphabet is the IPA alphabet, the second association may be an association between the word *"vuzix"* and the series of phonemes "vjuzIks" in the IPA alphabet; which corresponds to a sound nearly identical to the series of phonemes *"vjuzlks"* in the L&H+ alphabet.

The method 700 further comprises a seventh step 770 of setting up said speech processing engine using said second association.

At the output of step 770, the speech processing engine is able to perform its operations using the associations defined by the user.

For example, if the speech processing engine is a TTS engine using the IP alphabet, and the user wrote associations between words and series of phonemes in the L&H+ alphabet as shown for example in figure 6, these associations have been transcript into equivalent associations between a word and series of phonemes in the IPA alphabet.

Thus, these associations can be used to form or complete a dictionary of the TTS engine, such as the dictionary 331 that can be used to convert each word into the right series of phonemes.

In case a pre-existing association with a word and a series of phonemes is found in the dictionary, the pre-existing association may either be preserved, or replaced by the association defined by the user.

The method 700 therefore allows using associations defined by a user between a word and a series of phonemes to set up a speech processing engine, even if the speech processing engine uses a phonetic alphabet which is different from the alphabet used by the user.

It further allows re-using previously defined associations, even if they were initially written for another speech processing engine using a different phonetic alphabet.

The method 700 therefore eases the setting up of speech processing engines for users, because existing associations can be seamlessly reused.

It also allows a user to use speech processing engines that use a phonetic alphabet he is not familiar with.

It further improves the performances of speech processing engines, because the user can select the best suited engine in any case, and because the speech processing engines can be fed with more associations between words and series of phonemes, which increases their speech processing capabilities.

As noted above, in a number of embodiments of the invention, said step 770 of setting up said speech processing engine comprises adding said second association to a dictionary of said speech processing engine.

In practice, this consists for example in adding the association to dictionaries such as the dictionary 241 or the dictionary 331, which allow transcribing a word into a series of phonemes, or transcribing a series of phonemes into a word.

This allows the speech processing engine to use the associations directly.

As noted above, the speech processing engine usually rely on a dictionary 241 or 331 which already contains a number of base associations, and it may be possible that the second association is in conflict with one of the base associations, that is to say associate a same word to a different series of phoneme, or conversely a same series of phonemes to a different word. It is for example the case if the user wrote a second association that corresponds to a specific dialect/pronunciation, while the base association corresponds to the general pronunciation. In such a case, the base association may be either kept or superseded.

In a number of embodiments of the invention, said step of setting up said speech processing engine comprises adding said second association to a training database, and using a machine learning engine to train said speech processing engine using said training database.

For example, the dictionary obtained using all the associations defined by the user may be used to train a machine learning engine that will be able to associate to each word an fairly accurate phonetic transcription in the second phonetic alphabet.

For example, if the user wrote associations that relate to a specific dialect, or regional accent, the machine learning engine may be able to infer from a limited number of associations provided by the user general rules of conversion of words into series of phonemes for this dialect or regional accent.

In a number of embodiments of the invention, said steps of converting said series of phonemes in said first phonetic alphabet into the series of elements of said reference representation, converting said series of elements said reference representation into the series of phonemes in said second phonetic alphabet, generating the second association and setting up said speech processing engine are repeated for each word used in a dictionary of said speech processing engine.

Stated otherwise, when a dictionary comprises associations (some of them being defined by at least one user) between words and series of phonemes in a first phonetic alphabet, and a speech processing engine uses a second phonetic alphabet, the conversion of the series of phonemes from the first to the second phonetic alphabet, and the generation of an association with words accordingly are performed for each word in the dictionary.

This allows a complete dictionary to be defined for the speech processing engine.

In a number of embodiments of the invention, the speech processing engine is an ASR engine, and said steps of converting said series of phonemes in said first phonetic alphabet into the series of elements of said reference representation, converting said series of elements said reference representation into the series of phonemes in said second phonetic alphabet, generating the second association and setting up said speech processing engine are repeated for each word used in one or more grammars of said ASR engine.

Stated otherwise, the conversions are performed only for the words that are identified in one or more grammar of the ASR engine, because the words found in the grammars are the only words whose detection is sought.

For example, if a single grammar is used, which is the grammar represented in figure 5, only the conversions will be performed only for the series of phonemes corresponding to the word *"Hello"* (it is assumed that a pre-existing base association exists for this word) and the word *"vuzix"* (using the association provided by the user through the directive *"pronounce"*)*,* because these are the only two words that could be detected using this grammar.

This allows using the ASR engine for detecting all the words defined in the grammar, while limiting the number of operations, and therefore the computing load, for the conversion from the first phonetic alphabet to the second phonetic alphabet.

In a number of embodiments of the invention, the method 700 further comprises a step 780 of using said speech processing engine.

The step 780 consists in actually using the speech processing engine as previously set up, for example by performing automatic speech recognition if the speech processing engine is an ASR engine, or performing text to speech tasks if the speech processing engine is a TTS engine.

The step 780 may be performed at the same time as the preceding step, or at a future time. For example, the speech processing engine can be set up once, then used a plurality of future times, by the user that inputted the association and/or another end-user.

In a number of embodiments of the invention, said speech processing engine is an ASR engine, and said step of using said speech processing engine comprises the substeps of:
- receiving an audio input;
- using an acoustical model to transform the audio input into an input series of phonemes;
- if said input series of phoneme matches the series of phonemes in said second phonetic alphabet, detecting said word;
- displaying said word.

Stated otherwise, this consists in using an ASR engine such as the engine 200 which is set up with the association between the second association between said word and said series of phonemes in said second alphabet, so that the word can be recognized.

All the embodiments discussed with reference to figure 2 can respectively be applied to the method 700. In particular, the word detection of the ASR can be implemented within grammars.

In a number of embodiments of the invention, said speech processing engine is a text to speech (TTS) engine, and said step of using said speech processing engine consists in:
- receiving a text input comprising an input word;
- if said input word matches the word received from the user, converting said input word into said series of phonemes in said second phonetic alphabet;
- using a voice model to transform said series of phonemes in said second phonetic alphabet into an audio output;
- playing said audio output.

Stated otherwise, this consists in using a TTS engine such as the engine 300 which is set up with the association between the second association between said word and said series of phonemes in said second alphabet, so that the word can be recognized.

All the embodiments discussed with reference to figure 2 can respectively be applied to the method 700.

The examples described above are given as non-limitative illustrations of embodiments of the invention. They do not in any way limit the scope of the invention which is defined by the following claims.

## Claims

1. A computer-implemented method (700) comprising the steps of:
- accessing (710) a table of conversion (430) between a plurality of phonetic alphabets and a reference representation;
- receiving (720) from a user a first association between a word and a series of phonemes in a first phonetic alphabet belonging to said plurality of phonetic alphabets;
- obtaining (730) a selection of a speech processing engine using a second phonetic alphabet belonging to said plurality of phonetic alphabets and different from the first phonetic alphabet;
- converting (740) said series of phonemes in said first phonetic alphabet into a series of elements of said reference representation using said table;
- converting (750) said series of elements said reference representation into a series of phonemes in said second phonetic alphabet using said table;
- generating (760) a second association between said word and said series of phonemes in said second alphabet;
- setting up (770) said speech processing engine using said second association.

2. The computer-implemented method of claim 1, wherein said reference representation is a phonetic alphabet belonging to said plurality of alphabets.

3. The computer-implemented method of any of the preceding claims, wherein the elements of said reference representation are indexes representing phonemes.

4. The computer-implemented method of any of the preceding claims, wherein said step of setting up said speech processing engine comprises adding said second association to a dictionary of said speech processing engine.

5. The computer-implemented method of any of the preceding claims, wherein said step of setting up said speech processing engine comprises adding said second association to a training database, and using a machine learning engine to train said speech processing engine using said training database.

6. The computer-implemented method of claim 5, wherein said steps of converting said series of phonemes in said first phonetic alphabet into the series of elements of said reference representation, converting said series of elements said reference representation into the series of phonemes in said second phonetic alphabet, generating the second association and setting up said speech processing engine are repeated for each word used in a dictionary of said speech processing engine.

7. The computer-implemented method of claim 5, wherein the speech processing engine is an ASR engine, and said steps of converting said series of phonemes in said first phonetic alphabet into the series of elements of said reference representation, converting said series of elements said reference representation into the series of phonemes in said second phonetic alphabet, generating the second association and setting up said speech processing engine are repeated for each word used in one or more grammars of said ASR engine.

8. The computer-implemented method of any of the preceding claims, further comprising using said speech processing engine.

9. The computer-implemented method of claim 8, wherein said speech processing engine is an automatic speech recognition (ASR) engine, and said step of using said speech processing engine comprises the substeps of:
- receiving an audio input;
- using an acoustical model to transform the audio input into an input series of phonemes;
- if said input series of phoneme matches the series of phonemes in said second phonetic alphabet, detecting said word;
- displaying said word.

10. The computer-implemented method of one claim 8, wherein said speech processing engine is a text to speech (TTS) engine, and said step of using said speech processing engine consists in:
- receiving a text input comprising an input word;
- if said input word matches the word received from the user, converting said input word into said series of phonemes in said second phonetic alphabet;
- using a voice model to transform said series of phonemes in said second phonetic alphabet into an audio output;
- playing said audio output.

11. A speech processing engine set up using a computer-implemented method according to any one of the preceding claims.

12. A computer-implemented method of using a speech processing engine according to claim 11.

13. A computing system (400) comprising at least one processing logic (411) configured to execute a method according to any one of claims 1 to 10 and 12.

14. A computer program product comprising computer code instructions which, when the program is executed by a computer, cause the computer to carry out the steps of the method according to any one of claims 1 to 10 and 12.
